# EUROPÄISCHE PATENTSCHRIFT

(11) **EP 3 790 780 B1**
(45) Veröffentlichungstag und Bekanntmachung des Hinweises auf die Patenterteilung: **24.07.2024**
(21) Anmeldenummer: 19734300.7
(22) Anmeldetag: 17.06.2019
(51) Int. Cl.: B61L 15/00, G06F 21/31, B60R 25/04, B61L 27/40

(54) **ANORDNUNG ZUR SICHERUNG EINES SCHIENENFAHRZEUGS GEGEN HANDLUNGEN VON UNBEFUGTEN PERSONEN**
ARRANGEMENT FOR SECURING A RAIL VEHICLE AGAINST THE ACTIONS OF UNAUTHORISED PERSONS
DISPOSITIF DE PROTECTION D'UN VÉHICULE FERROVIAIRE CONTRE LES ACTIONS DE PERSONNES NON AUTORISÉES

(30) Priorität: 22.06.2018 DE 102018210242
(43) Veröffentlichungstag der Anmeldung: 17.03.2021
(73) Patentinhaber: Siemens Mobility GmbH, 81739 München (DE)
(72) Erfinder: STRÖSSNER, Christian, 91091 Großenseebach (DE)
(74) Vertreter: Siemens Patent Attorneys
(86) Internationale Anmeldenummer: PCT/EP2019/065900
(87) Internationale Veröffentlichungsnummer: WO 2019/243264

(56) Entgegenhaltungen:
- DE-A1- 102006 051 241
- DE-A1- 102011 080 592
- US-A1- 2009 048 725

## Beschreibung

Die Erfindung betrifft eine Anordnung zur Sicherung eines Schienenfahrzeugs gegen Handlungen (z.B. Inbetriebnahme, Bewegen, ...) von unbefugten Personen. Schienenfahrzeuge sind dabei insbesondere Triebfahrzeuge, Lokomotiven, Bahnfahrzeuge, etc.

Seitens der Betreiber von Schienenfahrzeugen wird zunehmend die Forderung gestellt, diese gegen Handlungen von unbefugten Personen verbessert und ausreichend zu schützen.

Aufgrund unterschiedlicher Infrastrukturen der Schienenfahrzeug-Betreiber und der langen Lebenszeiten der Schienenfahrzeuge, die bis zu 40 Jahren und mehr betragen, sind die derzeit im Umlauf befindlichen Schienenfahrzeuge mit sehr unterschiedlichen und teilweise veralteten Schutzmechanismen ausgerüstet.

Zum Schutz von Schienenfahrzeugen gegen Handlungen von unbefugten Personen sind beispielsweise mechanische Schließsysteme (z.B. Türschlösser) im Einsatz oder es werden elektronische Schlüsselschalter fahrzeugspezifisch zum Schutz von Schienenfahrzeugen verwendet.

Von einigen Betreibern werden standardisierte Fernsteuerkonzepte für Schienenfahrzeug (Triebfahrzeuge) verwendet, die eine Fernsteuerung des Fahrzeugs von außen erlauben. So wird beispielsweise ein Mehrfachtraktions- oder ein Steuerwagen-Betrieb mit Hilfe von Zugsteuerbussen oder Funkfernsteuerungen realisiert.

Derartige Systeme zur Fernsteuerung verfügen meist über keinen gesonderten Schutz gegen missbräuchliche Handlungen einer unbefugten Person am Schienenfahrzeug.

In älteren Bestandsfahrzeugen sind teilweise keine Schutzmechanismen vorgesehen, um diese Fahrzeuge gegen Handlungen von unbefugten Personen ausreichend zu schützen.

Verwendete Schutzmechanismen sind aufgrund der allgemeinen technischen Weiterentwicklung durch Unbefugte teilweise leicht zu umgehen. Eine Anpassung der vorhandenen Schutzmechanismen bzw. eine schutztechnische Nachrüstung von Schienenfahrzeugen auf ein gegenwärtiges Sicherheitsniveau ist mit großem Aufwand und mit entsprechend hohen Kosten verbunden.

Aus Dokument US 2009 048 725 A1 ist ein Lokomotivensicherheitssystem bekannt. Das Lokomotivensicherheitssystem umfasst einen Prozessor, der an einer Lokomotive angeordnet ist, ein an den Prozessor angeschlossenes E/A-Gerät und ein mit dem Prozessor verbundenes Lesegerät für Datenspeichermedien. Dabei kann die E/A-Vorrichtung konfiguriert sein, um persönliche Informationen von einem Bediener zu erhalten und die persönlichen Informationen an den Prozessor zu übermitteln. Zusätzlich kann das Datenträger-Lesegerät konfiguriert sein, um auf einem tragbaren Datenspeichermedium gespeicherte Daten zu lesen.

Es ist daher die Aufgabe der vorliegenden Erfindung, eine verbesserte Anordnung zur Sicherung eines Schienenfahrzeugs gegen Handlungen von unbefugten Personen bereitzustellen, mit der bei Neufahrzeugen und bei Bestandsfahrzeugen ein kostengünstiger, erhöhter Schutz gewährleisten wird.

Diese Aufgabe wird durch die Merkmale des Anspruchs 1 gelöst. Vorteilhafte Weiterbildungen sind in den abhängigen Ansprüchen angegeben.

In einer bevorzugten Weiterbildung beinhaltet die Freigabeeinrichtung ein Freigabesystem, das dazu ausgebildet ist, nach einer durchgeführten Authentifizierung einer berechtigten Person eine Schließung der Schalter zu initiieren.

Dabei ist das Freigabesystem bevorzugt mit einer lokalen Freigabeeinrichtung verbunden, die zur Durchführung einer Authentifizierung einer berechtigten Person ausgebildet ist.

In einer bevorzugten Weiterbildung ist die lokale Freigabeeinrichtung als Schlüsselschalter ausgebildet, der dazu ausgebildet ist, nach erfolgter Authentifizierung einer berechtigten Person ein Signal an das Freigabesystem zu übermitteln, um ein Schließen der Schalter zu initialisieren.

In einer bevorzugten Weiterbildung ist das Freigabesystem über eine binäre Verbindung mit der lokalen Freigabeeinrichtung verbunden.

In einer bevorzugten Weiterbildung beinhaltet die Freigabeeinrichtung einen Freigabecode-Dekodierer, der dazu ausgebildet ist, nach einer durchgeführten Authentifizierung einer berechtigten Person eine Schließung der Schalter zu initiieren. Der Freigabecode-Dekodierer ist mit einer Code-Übertragungseinrichtung verbunden, die zur Durchführung einer Authentifizierung einer berechtigten Person und zur nachfolgenden Übertragung einer gültigen Authentifizierung an den Freigabecode-Dekodierer ausgebildet ist.

In einer bevorzugten Weiterbildung ist die Code-Übertragungseinrichtung über ein Bussystem mit dem Freigabecode-Dekodierer verbunden.

In einer bevorzugten Weiterbildung beinhaltet die gültige Authentifizierung, die an den Freigabecode-Dekodierer übertragen wird, Angaben über Startzeit und Endzeit der erfolgten Authentifizierung. Der Freigabecode-Dekodierer ist dazu ausgebildet, Schließung der Schalter nur dann zu initiieren, wenn diese Zeitangaben vorbestimmte Zeitwerte erfüllen.

In einer bevorzugten Weiterbildung beinhaltet die Freigabeeinrichtung einen Freigabecode-Dekodierer, der dazu ausgebildet ist, nach einer durchgeführten Authentifizierung einer berechtigten Person eine Schließung der Schalter zu initiieren. Der Freigabecode-Dekodierer ist mit einer Code-Eingabe-Einrichtung (6) verbunden, die zur Durchführung einer Authentifizierung einer berechtigten Person und zur nachfolgenden Übertragung einer gültigen Authentifizierung an den Freigabecode-Dekodierer ausgebildet ist.

In einer bevorzugten Weiterbildung ist die Code-Eingabe-Einrichtung über ein Bussystem mit dem Freigabecode-Dekodierer verbunden.

In einer bevorzugten Weiterbildung beinhaltet die gültige Authentifizierung, die an den Freigabecode-Dekodierer übertragen wird, Angaben zur Zugnummer und/oder eine Angabe einer persönlichen Identifizierungsnummer der berechtigten Person. Diese Angaben werden mit entsprechenden, abgespeicherten Angaben im Schienenfahrzeug verglichen. Der Freigabecode-Dekodierer ist dazu ausgebildet, eine Schließung der Schalter nur dann dann zu initiieren, wenn der Vergleich eine Übereinstimmung der Angaben anzeigt.

In einer bevorzugten Weiterbildung weist das Schienenfahrzeug ein erstes Zugbussystem auf, das dazu ausgebildet ist, mit dem Schienenfahrzeug-Steuersignale für eine Mehrfachtraktions-Steuerung zu übertragen. Ein dritter Schalter ist im ersten Zugbussystem derart integriert angeordnet, dass die Übertragung der Steuersignale bei geöffnetem dritten Schalter unterbunden und bei geschlossenem dritten Schalter durchführbar ist.

In einer bevorzugten Weiterbildung weist das Schienenfahrzeug ein beliebiges zweites Zugbussystem auf, das dazu ausgebildet ist, mit dem Schienenfahrzeug-Steuersignale für die Steuerung der Mehrfachtraktion zu übertragen. Ein vierter Schalter ist im zweiten Zugbussystem derart integriert angeordnet, dass die Übertragung der Steuersignale bei geöffnetem vierten Schalter unterbunden und bei geschlossenem viertem Schalter durchführbar ist.

Beispielsweise ist das erste bzw. zweite Zugbussystem als bekannter "Wire Train Bus, WTB", als "Ethernet-Train-Backbone, ETB", als CAN-Powerline, etc., ausgebildet.

Die erfindungsgemäße Anordnung ist mit geringem Aufwand und kostengünstig in Bestandsfahrzeuge nachrüstbar.

Die erfindungsgemäße Anordnung ist baugleich und ebenfalls mit geringem Aufwand und kostengünstig in Neufahrzeuge integrierbar.

Die erfindungsgemäße Anordnung bietet einen erhöhten Schutz, indem Hauptsysteme des Schienenfahrzeugs (z.B. Antriebskomponenten, Hochspannungskomponenten, etc.) gesperrt werden.

Die erfindungsgemäße Anordnung ergänzt im Schienenfahrzeug eventuell bereits existierende Sicherheitsmaßnahmen ohne technische Schnittstellenprobleme.

Die erfindungsgemäße Anordnung wird herstellerseitig bevorzugt als abgeschlossene Standard-Komponente bereitgestellt, so dass die Anordnung als Baugruppe in eine Vielzahl unterschiedlicher Schienenfahrzeugtypen (Lokomotiven, Triebzüge, Straßenbahnen, U-Bahnen, etc.) integrierbar ist.

Die erfindungsgemäße Anordnung hat die Funktionalität einer elektronischen "Aufrüst- und Wegfahrsperre" und ist in die elektrischen Steuerkreise für die Hochspannungsausrüstungen, für die Hauptschalter, für den Stromabnehmer sowie für eine Antriebsfreigabe ("Traktionsfreigabe") eingefügt. Diese Steuerkreise sind im Sinne von "Freigabeschleifen" in der Regel als Serienschaltungen von mehreren Systemen ausgebildet und existieren auf nahezu allen Fahrzeugen mit elektronischer Fahrzeugsteuerung.

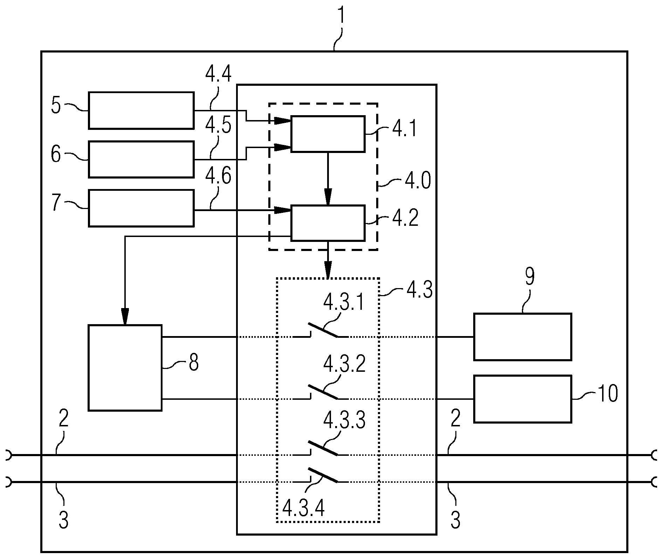

Nachfolgend wird die vorliegende Erfindung beispielhaft anhand einer Figur FIG 1 näher beschrieben.

Dabei zeigt FIG 1 in einer schematischen Darstellung eine erfindungsgemäße Anordnung zur Sicherung eines Schienenfahrzeugs 1 gegen Handlungen von unbefugten Personen.

Das Schienenfahrzeug 1 beinhaltet eine elektronische Fahrzeugsteuerung 8, die mit einer Einrichtung zur Antriebsfreigabe 9 verbunden ist. Diese Einrichtung zur Antriebsfreigabe 9 kontrolliert Antriebskomponenten für den Betrieb des Schienenfahrzeugs.

Die Fahrzeugsteuerung 8 ist mit einer Einrichtung zur Hochspannungsfreigabe 10 verbunden, die Hochspannungskomponenten für den Betrieb des Schienenfahrzeugs 1 kontrolliert.

Das Schienenfahrzeug 1 beinhaltet eine Sperreinrichtung 4.3 mit steuerbaren Schaltern 4.3.1 bis 4.3.4.

Ein erster Schalter 4.3.1 ist zwischen der Fahrzeugsteuerung 8 und der Einrichtung zur Antriebsfreigabe 9 zwischengeschaltet, so dass die Kontrolle der Antriebskomponenten bei geöffnetem ersten Schalter 4.3.1 unterbunden und bei geschlossenem ersten Schalter 4.3.1 durchführbar ist.

Ein zweiter Schalter 4.3.2 ist zwischen der Fahrzeugsteuerung 8 und der Einrichtung zur Hochspannungsfreigabe 10 zwischengeschaltet, so dass die Kontrolle der Hochspannungskomponenten bei geöffnetem zweiten Schalter 4.3.2 unterbunden und bei geschlossenem zweiten Schalter 4.3.2 durchführbar ist.

Die Sperreinrichtung 4.3 ist zur Steuerung der Schalter 4.3.1 bis 4.3.4 mit einer Freigabeeinrichtung 4.0 verbunden, die nach einer durchgeführten Authentifizierung einer berechtigten Person die Schalter 4.3.1 bis 4.3.4 schließt, um die jeweiligen Kontrollen und damit den Betrieb des Schienenfahrzeugs 1 zu ermöglichen.

Die Freigabeeinrichtung 4.0 beinhaltet ein Freigabesystem 4.2, das nach einer durchgeführten Authentifizierung einer berechtigten Person eine Schließung der Schalter 4.3.1 bis 4.3.4 initiiert. Das Freigabesystem 4.2 ist mit einer lokalen Freigabeeinrichtung 7 verbunden, die zur Durchführung einer Authentifizierung einer berechtigten Person ausgebildet ist.

Die lokale Freigabeeinrichtung 7 ist als Schlüsselschalter ausgebildet, der nach erfolgter Authentifizierung (also Betätigung einer berechtigten Person) ein Signal an das Freigabesystem 4.2 übermittelt, um ein Schließen der Schalter zu initialisieren.

Alternativ kann die lokale Freigabeeinrichtung 7 als Authentifizierungssystem des Triebfahrzeugführers (z.B. als Kartenleser) ausgebildet sein.

Das Freigabesystem ist über eine binäre Verbindung 4.6 mit der lokalen Freigabeeinrichtung 7 verbunden.

Die Freigabeeinrichtung 4.0 beinhaltet einen Freigabecode-Dekodierer 4.1, der nach einer durchgeführten Authentifizierung einer berechtigten Person eine Schließung der Schalter 4.3.1 bis 4.3.4 initiiert.

Der Freigabecode-Dekodierer 4.1 ist mit einer Code-Übertragungseinrichtung 5 verbunden, die zur Durchführung einer Authentifizierung einer berechtigten Person und zur nachfolgenden Übertragung einer gültigen Authentifizierung an den Freigabecode-Dekodierer 4.1 ausgebildet ist.

Die Code-Übertragungseinrichtung 5 ist über ein Bussystem 4.4 mit dem Freigabecode-Dekodierer 4.1 verbunden.

Die gültige Authentifizierung, die an den Freigabecode-Dekodierer 4.1 übertragen wird, beinhaltet Angaben über Startzeit und Endzeit der erfolgten Authentifizierung. Der Freigabecode-Dekodierer 4.1 initiiert nur dann eine Schlie-βung der Schalter, wenn diese Zeitangaben vorbestimmte Zeitwerte erfüllen.

Der Freigabecode-Dekodierer 4.1 ist mit einer Code-Eingabe-Einrichtung 6 verbunden, die zur Durchführung einer Authentifizierung einer berechtigten Person und zur nachfolgenden Übertragung einer gültigen Authentifizierung an den Freigabecode-Dekodierer 4.1 ausgebildet ist.

Die Code-Eingabe-Einrichtung 6 ist über ein Bussystem 4.5 mit dem Freigabecode-Dekodierer 4.1 verbunden.

In einer weiteren Ausbildung beinhaltet die gültige Authentifizierung, die an den Freigabecode-Dekodierer 4.1 übertragen wird, Angaben zur Zugnummer und/oder eine Angabe einer persönlichen Identifizierungsnummer der berechtigten Person. Diese Angaben werden mit entsprechenden, abgespeicherten Angaben im Schienenfahrzeug verglichen. Der Freigabecode-Dekodierer 4.1 initiiert nur dann eine Schließung der Schalter, wenn der Vergleich eine Übereinstimmung der Angaben anzeigt.

Das Freigabesystem 4.2 ist darüber hinaus zur Erhöhung der Systemsicherheit mit der Fahrzeugsteuerung 8 verbunden.

Das Schienenfahrzeug 1 weist ein erstes Zugbussystem 2 auf, mit dem Schienenfahrzeug-Steuersignale für die Steuerung der Mehrfachtraktion übertragen werden. Ein dritter Schalter 4.3.3 ist im ersten Zugbussystem 2 derart integriert angeordnet, dass die Übertragung der Steuersignale bei geöffnetem dritten Schalter 4.3.3 unterbunden und bei geschlossenem dritten Schalter 4.3.3 durchführbar ist.

Das Schienenfahrzeug weist 1 ein zweites Zugbussystem 3 auf, mit dem Schienenfahrzeug-Steuersignale für die Steuerung der Mehrfachtraktion übertragen werden. Ein vierter Schalter 4.3.4 ist im zweiten Zugbussystem 3 derart integriert angeordnet, dass die Übertragung der Steuersignale bei geöffnetem vierten Schalter 4.3.4 unterbunden und bei geschlossenem viertem Schalter 4.3.4 durchführbar ist.

In einer bevorzugten Weiterbildung werden als Schalter elektrische Kontakte verwendet, die für die auf Bahnfahrzeugen üblichen Steuerstrom-Spannungsniveaus 24V, 72V und 110V geeignet sind.

Der Freigabecode-Dekodierer 4.1 empfängt über geeignete Bus- oder Übertragungssysteme 4.4 und 4.5 Freigabeinformationen und/oder Freigabezertifikate mit bevorzugt folgenden Eigenschaften:
- Angabe eines Freigabeschlüssels oder eines Freigabezertifikats zum Vergleich mit Verifikationsinformationen, die systemseitig im Schienenfahrzeug 1 gespeichert sind,
- dabei kann die Komplexität des Freigabeschlüssels hinsichtlich eines gewünschten Security-Levels variieren. In der Regel kommen bevorzugt 256bit-Schlüssel zur Verwendung,
- Freigabeinformation beinhaltet zusätzlich Angaben über Startzeit der Freigabe und über die Endzeit der Freigabe. Die Einrichtung 4.1 gibt die Freigabeinformation nur dann weiter, wenn die aktuelle Uhrzeit im empfangenen Zeitintervall liegt und gleichzeitig der empfangene Freigabeschlüssel gültig ist. Nach Ablauf der Endzeit wird die Freigabe zurückgenommen und so die Fahrzeugfunktionen gesperrt,
- optional beinhaltet die Freigabeinformation Angaben zur Zugnummer und zur persönlichen ID des Triebfahrzeugführers, die mit Informationen aus der Code-Eingabeeinrichtung 6 verglichen werden. An dieser Eingabeeinrichtung gibt das Benutzungspersonal Zugnummer und/oder persönliche ID ein. Nur wenn die eingegebenen Informationen mit den übertragenen Codes/Zertifikate übereinstimmen, gibt der Decodierer 4.1 die Freigabeinformation mit Hilfe des Freigabesystems weiter,
- als Busübertragungssysteme kommen alle gängigen Datenübertragungssysteme (z.B. Ethernet) oder MVB-basierten Übertragungen in Frage,
- als Quelle für die Freigabeinformationen können Code-Eingabegeräte 6 verwendet werden, die entweder im Fahrzeug bereits vorhanden sind (z.B. Fahrerstandsdisplays) oder zusätzlich eingebaute Eingabeeinheiten. Alternativ werden Freigabeinformationen mit Hilfe von Code-Übertragern 5 an das System übertragen. Dazu können im Fahrzeug verwendete Datenfernübertragungseinrichtungen oder auch Speichersysteme mit Schnittstelle (z.B. NAS mit USB-Schnittstelle) verwendet werden.

Die beschriebenen Elemente "Freigabeeinrichtung 4.0" und "Sperreinrichtung 4.3" verwirklichen im Kern und zusammengefasst die Funktionalität einer "Aufrüst-" bzw. "Wegfahrsperre".

## Patentansprüche

1. Anordnung zur Sicherung eines Schienenfahrzeugs (1) gegen Handlungen von unbefugten Personen,
- bei der das Schienenfahrzeug (1) eine elektronische Fahrzeugsteuerung (8) beinhaltet,
- bei der die Fahrzeugsteuerung (8) mit einer Einrichtung zur Antriebsfreigabe (9) verbunden ist, die dazu ausgebildet ist, die Antriebskomponenten für den Betrieb des Schienenfahrzeugs (1) zu kontrollieren,
- bei der die Fahrzeugsteuerung (8) mit einer Einrichtung zur Hochspannungsfreigabe (10) verbunden ist, die dazu ausgebildet ist, die Hochspannungskomponenten für den Betrieb des Schienenfahrzeugs (1) zu kontrollieren,
- bei der das Schienenfahrzeug (1) eine Sperreinrichtung (4.3) mit steuerbaren Schaltern (4.3.1 bis 4.3.4) beinhaltet,
- bei der ein erster Schalter (4.3.1) zwischen der Fahrzeugsteuerung (8) und der Einrichtung zur Antriebsfreigabe (9) zwischengeschaltet ist, so dass die Kontrolle der Antriebskomponenten bei geöffnetem ersten Schalter (4.3.1) unterbunden und bei geschlossenem ersten Schalter (4.3.1) durchführbar ist,
- bei der ein zweiter Schalter (4.3.2) zwischen der Fahrzeugsteuerung (8) und der Einrichtung zur Hochspannungsfreigabe (10) zwischengeschaltet ist, so dass die Kontrolle der Hochspannungskomponenten bei geöffnetem zweiten Schalter (4.3.2) unterbunden und bei geschlossenem zweiten Schalter (4.3.2) durchführbar ist,
- bei der die Sperreinrichtung (4.3) zur Steuerung der Schalter (4.3.1 bis 4.3.4) mit einer Freigabeeinrichtung (4.1, 4.2) verbunden ist, die dazu ausgebildet ist, nach einer durchgeführten Authentifizierung einer berechtigten Person die Schalter (4.3.1 bis 4.3.4) zu schließen, um die jeweiligen Kontrollen und damit den Betrieb des Schienenfahrzeugs (1) zu ermöglichen.

2. Anordnung nach Anspruch 1,
- bei der die Freigabeeinrichtung (4.1, 4.2) ein Freigabesystem (4.2) beinhaltet, das dazu ausgebildet ist, nach einer durchgeführten Authentifizierung einer berechtigten Person eine Schlie-βung der Schalter (4.3.1 bis 4.3.4) zu initiieren,
- bei der das Freigabesystem (4.2) mit einer lokalen Freigabeeinrichtung (7) verbunden ist, die zur Durchführung einer Authentifizierung einer berechtigten Person ausgebildet ist.

3. Anordnung nach Anspruch 2, bei der die lokale Freigabeeinrichtung (7) als Schlüsselschalter ausgebildet ist, und dazu ausgebildet ist, der nach erfolgter Authentifizierung einer berechtigten Person ein Signal an das Freigabesystem (4.2) zu übermitteln, um ein Schließen der Schalter zu initialisieren.

4. Anordnung nach Anspruch 2 oder 3, bei der das Freigabesystem (4.2) über eine binäre Verbindung (4.6) mit der lokalen Freigabeeinrichtung (7) verbunden ist.

5. Anordnung nach Anspruch 1,
- bei der die Freigabeeinrichtung (4.1, 4.2) einen Freigabecode-Dekodierer (4.1) beinhaltet, der dazu ausgebildet ist, nach einer durchgeführten Authentifizierung einer berechtigten Person eine Schließung der Schalter (4.3.1 bis 4.3.4) zu initiieren,
- bei der der Freigabecode-Dekodierer (4.1) mit einer Code-Übertragungseinrichtung (5) verbunden ist, die zur Durchführung einer Authentifizierung einer berechtigten Person und zur nachfolgenden Übertragung einer gültigen Authentifizierung an den Freigabecode-Dekodierer (4.1) ausgebildet ist.

6. Anordnung nach Anspruch 5, bei der die Code-Übertragungseinrichtung (5) über ein Bussystem (4.4) mit dem Freigabecode-Dekodierer (4.1) verbunden ist.

7. Anordnung nach Anspruch 5 oder 6,
- bei der die gültige Authentifizierung, die an den Freigabecode-Dekodierer (4.1) übertragen wird, Angaben über Startzeit und Endzeit der erfolgten Authentifizierung beinhaltet, und
- bei der der Freigabecode-Dekodierer (4.1) dazu ausgebildet ist, eine Schlie-βung der Schalter nur dann zu initiieren, wenn diese Zeitangaben vorbestimmte Zeitwerte erfüllen.

8. Anordnung nach Anspruch 1,
- bei der die Freigabeeinrichtung (4.1, 4.2) einen Freigabecode-Dekodierer (4.1) beinhaltet, der dazu ausgebildet ist, nach einer durchgeführten Authentifizierung einer berechtigten Person eine Schließung der Schalter (4.3.1 bis 4.3.4) zu initiieren,
- bei der der Freigabecode-Dekodierer (4.1) mit einer Code-Eingabe-Einrichtung (6) verbunden ist, die zur Durchführung einer Authentifizierung einer berechtigten Person und zur nachfolgenden Übertragung einer gültigen Authentifizierung an den Freigabecode-Dekodierer (4.1) ausgebildet ist.

9. Anordnung nach Anspruch 8, bei der die Code-Eingabe-Einrichtung (6) über ein Bussystem (4.5) mit dem Freigabecode-Dekodierer (4.1) verbunden ist.

10. Anordnung nach Anspruch 8 oder 9,
- bei der die gültige Authentifizierung, die an den Freigabecode-Dekodierer (4.1) übertragen wird, Angaben zur Zugnummer und/oder eine Angabe einer persönlichen Identifizierungsnummer der berechtigten Person beinhaltet,
- wobei der Freigabecode-Dekodierer (4.1) dazu ausgebildet ist, diese Angaben mit entsprechenden, abgespeicherten Angaben im Schienenfahrzeug zu vergleichen,
- bei der der Freigabecode-Dekodierer (4.1) dazu ausgebildet ist, eine Schlie-βung der Schalter nur dann zu initiieren, wenn der Vergleich eine Übereinstimmung der Angaben anzeigt.

11. Anordnung nach Anspruch 1,
- bei der das Schienenfahrzeug (1) ein erstes Zugbussystem (2) aufweist, das dazu ausgebildet ist, mit dem Schienenfahrzeug-Steuersignale für eine Steuerung einer Mehrfachtraktion zu übertragen, und
- bei der ein dritter Schalter (4.3.3) im ersten Zugbussystem (2) derart integriert angeordnet ist, dass die Übertragung der Steuersignale bei geöffnetem dritten Schalter (4.3.3) unterbunden und bei geschlossenem dritten Schalter (4.3.3) durchführbar ist.

12. Anordnung nach Anspruch 1,
- bei der das Schienenfahrzeug (1) ein zweites Zugbussystem (3) aufweist, das dazu ausgebildet ist, mit dem Schienenfahrzeug-Steuersignale für eine Steuerung einer Mehrfachtraktion zu übertragen, und
- bei der ein vierter Schalter (4.3.4) im zweiten Zugbussystem (3) derart integriert angeordnet ist, dass die Übertragung der Steuersignale bei geöffnetem vierten Schalter (4.3.4) unterbunden und bei geschlossenem viertem Schalter (4.3.4) durchführbar ist.

## Claims

1. Arrangement for securing a rail vehicle (1) against actions of unauthorized persons,
- wherein the rail vehicle (1) contains an electronic vehicle control system (8),
- wherein the vehicle control system (8) is connected to a drive-enabling device (9) which is designed so as to control the drive components for the operation of the rail vehicle (1),
- wherein the vehicle control system (8) is connected to a high-voltage-enabling device (10) which is designed so as to control the high-voltage components for the operation of the rail vehicle (1),
- wherein the rail vehicle (1) contains a locking device (4.3) with controllable switches (4.3.1 to 4.3.4),
- wherein a first switch (4.3.1) is connected between the vehicle control system (8) and the drive-enabling device (9) such that the control of the drive components is suppressed when the first switch (4.3.1) is open and is able to be carried out when the first switch (4.3.1) is closed,
- wherein a second switch (4.3.2) is connected between the vehicle control system (8) and the high-voltage-enabling device (10) such that the control of the high-voltage components is suppressed when the second switch (4.3.2) is open and is able to be carried out when the second switch (4.3.2) is closed,
- wherein, for the control of the switches (4.3.1 to 4.3.4), the locking device (4.3) is connected to an enabling device (4.1, 4.2) which is designed so as, once authentication of an authorized person has been carried out, to close the switches (4.3.1 to 4.3.4) in order to permit the respective controls and thus the operation of the rail vehicle (1).

2. Arrangement according to Claim 1,
- wherein the enabling device (4.1, 4.2) contains an enabling system (4.2) which is designed so as, once authentication of an authorized person has been carried out, to initiate closing of the switches (4.3.1 to 4.3.4),
- wherein the enabling system (4.2) is connected to a local enabling device (7) which is designed so as to carry out authentication of an authorized person.

3. Arrangement according to Claim 2, wherein the local enabling device (7) is in the form of a key-operated switch and is designed so as, once authentication of an authorized person has been executed, to transmit a signal to the enabling system (4.2) in order to initiate closing of the switches.

4. Arrangement according to Claim 2 or 3, wherein the enabling system (4.2) is connected to the local enabling device (7) by means of a binary connection (4.6).

5. Arrangement according to Claim 1,
- wherein the enabling device (4.1, 4.2) contains an enabling-code decoder (4.1) which is designed so as, once authentication of an authorized person has been carried out, to initiate closing of the switches (4.3.1 to 4.3.4),
- wherein the enabling-code decoder (4.1) is connected to a code transmission device (5) which is designed so as to carry out authentication of an authorized person and to subsequently transmit a valid authentication to the enabling-code decoder (4.1).

6. Arrangement according to Claim 5, wherein the code transmission device (5) is connected to the enabling-code decoder (4.1) by means of a bus system (4.4).

7. Arrangement according to Claim 5 or 6,
- wherein the valid authentication which is transmitted to the enabling-code decoder (4.1) contains data on the start time and end time of the authentication executed, and
- wherein the enabling-code decoder (4.1) is designed so as to only initiate closing of the switches if these time data fulfil predefined time values.

8. Arrangement according to Claim 1,
- wherein the enabling device (4.1, 4.2) contains an enabling-code decoder (4.1) which is designed so as, once authentication of an authorized person has been carried out, to initiate closing of the switches (4.3.1 to 4.3.4),
- wherein the enabling-code decoder (4.1) is connected to a code input device (6) which is designed so as to carry out authentication of an authorized person and to subsequently transmit a valid authentication to the enabling-code decoder (4.1) .

9. Arrangement according to Claim 8, wherein the code input device (6) is connected to the enabling-code decoder (4.1) by means of a bus system (4.5).

10. Arrangement according to Claim 8 or 9,
- wherein the valid authentication which is transmitted to the enabling-code decoder (4.1) contains data on the train number and/or data with respect to a personal identification number of the authorized person,
- wherein the enabling-code decoder (4.1) is designed so as to compare these data with corresponding data which are saved in the rail vehicle,
- wherein the enabling-code decoder (4.1) is designed so as to only initiate closing of the switches if the comparison indicates matching of the data.

11. Arrangement according to Claim 1,
- wherein the rail vehicle (1) has a first train bus system (2) which is designed so as, by means of the rail vehicle, to transmit control signals for a multiple-unit control system, and
- wherein a third switch (4.3.3) is arranged integrated in the first train bus system (2) in such a way that the transmission of the control signals is suppressed when the third switch (4.3.3) is open and is able to be carried out when the third switch (4.3.3) is closed.

12. Arrangement according to Claim 1,
- wherein the rail vehicle (1) has a second train bus system (3) which is designed so as, by means of the rail vehicle, to transmit control signals for a multiple-unit control system, and
- wherein a fourth switch (4.3.4) is arranged integrated in the second train bus system (3) in such a way that the transmission of the control signals is suppressed when the fourth switch (4.3.4) is open and is able to be carried out when the fourth switch (4.3.4) is closed.

## Revendications

1. Agencement de protection d'un véhicule ferroviaire (1) contre les actions de personnes non autorisées,
- dans lequel le véhicule ferroviaire (1) contient une commande électronique de véhicule (8),
- dans lequel la commande de véhicule (8) est reliée à un dispositif de validation de l'entraînement (9) qui est conçu pour commander les composants d'entraînement pour le fonctionnement du véhicule ferroviaire (1),
- dans lequel la commande de véhicule (8) est reliée à un dispositif de validation haute tension (10) qui est conçu pour commander les composants haute tension pour le fonctionnement du véhicule ferroviaire (1),
- dans lequel le véhicule ferroviaire (1) contient un dispositif de verrouillage (4.3) ayant des interrupteurs commandables (4.3.1 à 4.3.4),
- dans lequel un premier interrupteur (4.3.1) est interposé entre la commande de véhicule (8) et le dispositif de validation de l'entraînement (9), de sorte que la commande des composants d'entraînement est verrouillée lorsque le premier interrupteur (4.3.1) est ouvert, et peut être réalisée lorsque le premier interrupteur (4.3.1) est fermé,
- dans lequel un deuxième interrupteur (4.3.2) est interposé entre la commande de véhicule (8) et le dispositif de validation haute tension (10), de sorte que la commande des composants haute tension est verrouillée lorsque le deuxième interrupteur (4.3.2) est ouvert, et peut être réalisée lorsque le deuxième interrupteur (4.3.2) est fermé.
- dans lequel pour commander les interrupteurs (4.3.1 à 4.3.4) le dispositif de verrouillage (4.3) est relié à un dispositif de déverrouillage (4.1, 4.2) qui est conçu pour fermer les interrupteurs (4.3.1 à 4.3.4) après authentification par une personne autorisée pour permettre les commandes respectives et donc le fonctionnement du véhicule ferroviaire (1).

2. Agencement selon la revendication 1,
- dans lequel le dispositif de déverrouillage (4.1, 4.2) contient un système de déverrouillage (4.2) qui est conçu pour déclencher la fermeture des interrupteurs (4.3.1 à 4.3.4) après une authentification réalisée d'une personne autorisée,
- dans lequel le système de déverrouillage (4.2) est relié à un dispositif de déverrouillage local (7) qui est conçu pour effectuer l'authentification par une personne autorisée.

3. Agencement selon la revendication 2, dans lequel le dispositif de déverrouillage local (7) est conçu sous forme d'interrupteur à clé et est conçu pour transmettre un signal au système de déverrouillage (4.2) après authentification réussie par une personne autorisée afin d'initialiser la fermeture des interrupteurs.

4. Agencement selon la revendication 2 ou 3, dans lequel le système de déverrouillage (4.2) est relié au dispositif de déverrouillage local (7) par le biais d'une liaison binaire (4.6).

5. Agencement selon la revendication 1,
- dans lequel le dispositif de déverrouillage (4.1, 4.2) contient un décodeur de code de déverrouillage (4.1) qui est conçu pour déclencher la fermeture des interrupteurs (4.3.1 à 4.3.4) après une authentification réalisée d'une personne autorisée,
- dans lequel le décodeur de code de déverrouillage (4.1) est relié à un dispositif de transmission de code (5) qui est conçu pour effectuer l'authentification par une personne autorisée et pour transmettre ensuite une authentification valide au décodeur de code de déverrouillage (4.1).

6. Agencement selon la revendication 5, dans lequel le dispositif de transmission de code (5) est relié au décodeur de code de déverrouillage (4.1) par le biais d'un système de bus (4.4).

7. Agencement selon la revendication 5 ou 6,
- dans lequel l'authentification valide, qui est transmise au décodeur de code de déverrouillage (4.1), contient des informations sur l'heure de début et l'heure de fin de l'authentification réussie, et
- dans lequel le décodeur de code de déverrouillage (4.1) est conçu pour déclencher la fermeture des interrupteurs uniquement lorsque ces spécifications de temps correspondent à des valeurs de temps prédéterminées.

8. Agencement selon la revendication 1,
- dans lequel le dispositif de déverrouillage (4.1, 4.2) contient un décodeur de code de déverrouillage (4.1) qui est conçu pour déclencher la fermeture des interrupteurs (4.3.1 à 4.3.4) après une authentification réalisée d'une personne autorisée,
- dans lequel le décodeur de code de déverrouillage (4.1) est relié à un dispositif de saisie de code (6) qui est conçu pour effectuer l'authentification par une personne autorisée et pour transmettre ensuite une authentification valide au décodeur de code de déverrouillage (4.1).

9. Agencement selon la revendication 8, dans lequel le dispositif de saisie de code (6) est relié au décodeur de code de déverrouillage (4.1) par le biais d'un système de bus (4.5).

10. Agencement selon la revendication 8 ou 9,
- dans lequel l'authentification valide transmise au décodeur de code de déverrouillage (4.1) contient des informations sur le numéro de train et/ou une information sur un numéro d'identification personnel de la personne autorisée,
- dans lequel le décodeur de code de déverrouillage (4.1) est conçu pour comparer ces informations avec des informations correspondantes enregistrées dans le véhicule ferroviaire,
- dans lequel le décodeur de code de déverrouillage (4.1) est conçu pour déclencher la fermeture des interrupteurs uniquement lorsque la comparaison montre que les informations correspondent.

11. Agencement selon la revendication 1,
- dans lequel le véhicule ferroviaire (1) présente un premier système de bus ferroviaire (2) qui est conçu pour transmettre des signaux de commande au véhicule ferroviaire pour commander une traction multiple, et
- dans lequel un troisième interrupteur (4.3.3) est disposé de manière intégrée au premier système de bus ferroviaire (2), de sorte que la transmission des signaux de commande est verrouillée lorsque le troisième interrupteur (4.3.3) est ouvert et peut être réalisée lorsque le troisième interrupteur (4.3.3) est fermé.

12. Agencement selon la revendication 1,
- dans lequel le véhicule ferroviaire (1) présente un deuxième système de bus ferroviaire (3) qui est conçu pour transmettre des signaux de commande au véhicule ferroviaire pour commander une traction multiple, et
- dans lequel un quatrième interrupteur (4.3.4) est disposé de manière intégrée au deuxième système de bus ferroviaire (3), de sorte que la transmission des signaux de commande est verrouillée lorsque le quatrième interrupteur (4.3.4) est ouvert et peut être réalisée lorsque le quatrième interrupteur (4.3.4) est fermé.
